# EUROPEAN PATENT APPLICATION

(11) **EP 4 184 313 A1**
(43) Date of publication of application: **24.05.2023**
(21) Application number: 21949883.9
(22) Date of filing: 18.09.2021
(51) Int. Cl.: G06F 8/10

(54) **DEMAND CONFORMITY ANALYSIS METHOD AND SYSTEM, AND ELECTRONIC DEVICE AND STORAGE MEDIUM**

(30) Priority: 12.07.2021 CN 202110783999
(71) Applicant: CASCO SIGNAL LTD., Shanghai 200070 (CN)
(72) Inventor: CHEN, Xiaoxuan, Shanghai 200070 (CN); MIAO, Weikai, Shanghai 200070 (CN); PU, Geguang, Shanghai 200070 (CN); FENG, Jincao, Shanghai 200070 (CN); XIA, Yechuan, Shanghai 200070 (CN); WANG, Yisu, Shanghai 200070 (CN); CAI, Xiong, Shanghai 200070 (CN); QIAO, Yanru, Shanghai 200070 (CN)
(74) Representative: Sanger, Phillip Simon
(86) International application number: PCT/CN2021/119230
(87) International publication number: WO 2023/284108

(57) **Abstract**

Disclosed is a requirement conformity parsing method and system, an electronic device and a storage medium, the method including: obtaining a requirements document that needs to be parsed, and viewing a requirement in the requirements document; performing requirement conformity parsing on several upper-level requirements and corresponding lower-level requirements thereof in the requirements document; introducing a requirements knowledge map to semantically expand a proper noun in the requirements; checking a requirement traceability relationship; checking a requirement traceability label existing in the requirements document; and automatically supplementing the requirements document. The method according to the present invention carries out assistant checking on the requirement conformity between different levels, which improves the accuracy of the requirement conformity; and the method facilitates requirement analysts to conveniently and quickly review the requirements between different levels, which improves the accuracy and standardization of requirements.

## Description

### TECHNICAL FIELD

The present invention relates to the technical field of natural language processing, and in particular, to a requirement conformity parsing method, a system, an electronic device and a storage medium.

### BACKGROUND

Requirements engineers will inevitably make some mistakes when writing natural language requirements. If errors in the requirements stage cannot be discovered and dealt with in time, it will have an immeasurable impact on the entire project. In order to ensure the correctness of the requirements, it is very necessary to review and verify the requirements. However, manual inspection of traceability requirements is not only time-consuming and laborious, but also cannot ensure the correctness of the review. In addition, it is also difficult to trace and check the requirements, including checking the compatibility of the semantics of natural language between different versions and whether the pseudocode is consistent with the intention of the natural language requirements. In addition to ensuring the correctness of requirements, the writing of large-scale software requirements documents has always been a trouble for requirements analysts, who usually need to read a large number of documents when writing.

To solve the above problems, it has become an urgent problem to propose a method that can facilitate requirements analysts to quickly and conveniently detect the conformity of upper and lower level requirements in the platform, and can trace the conformity of upper and lower level natural language requirements, as well as provide some reference information to requirements engineers when writing requirements.

### SUMMARY

I The purpose of the present invention is to provide a requirement conformity parsing method, system, electronic device and storage medium, aiming to solve the problem of manual review in the process of requirements development and management in the prior art to check the consistency of the upper and lower layers, which consumes manpower and time and cannot ensure the correctness of the review.

In order to achieve the above object, the present invention provides a requirement conformity parsing method, including:
obtaining a requirements document that needs to be parsed, and viewing a requirement in the requirements document;
performing requirement conformity parsing on several upper-level requirements and corresponding lower-level requirements thereof in the requirements document;
introducing a requirements knowledge map to semantically expand a proper noun in the requirements;
checking a requirement traceability relationship; checking a requirement traceability label existing in the requirements document, so as to check the consistency between the requirement traceability label and an actual structure of the requirements document; and
automatically supplementing the requirements document.

Preferably, the requirement conformity parsing includes:
establishing a conformity evaluation system for checking the consistency between the several upper-level requirements and the corresponding lower-level requirements thereof;
using a natural language processing module to construct a requirement statement model from the several upper-level requirements and the several lower-level requirements, respectively;
extracting a core content of the requirement by the requirement statement model; and
performing syntax parsing, semantic parsing and classifier parsing respectively on the core content of the requirement through the conformity evaluation system, and giving a final evaluation result.

Preferably, the natural language processing module is a stanza natural language processing module.

Preferably, the core content of the requirement includes a subject, an object, a syntactical relationship formed by subject-verb-object and a quantity relationship formed by subject-keyword-object of the requirement statement.

Preferably, the step of introducing a requirements knowledge map includes: semantically supplementing two proper nouns according a predetermined relationship between the two proper nouns, so as to determine the requirement conformity between the several upper-level requirements and the corresponding lower-level requirements thereof.

Preferably, requirement traceability labels of the several upper-level requirements and the corresponding lower-level requirements thereof are compared with the structure of the requirements document, and a checking result of the requirement traceability relationship is configured to assist the requirement conformity parsing of the several upper-level requirements and the corresponding lower-level requirements thereof.

Preferably, the step of automatically supplementing the requirements document includes:
using a machine learning model to train a historical requirements document, and to determine whether the historical requirements document needs to be added to semantic consistency determination according to a feedback; and
automatically generating, after writing some requirements, a required requirements document according to the historical requirements document and the semantic parsing.

Preferably, the machine learning model is any one of transformer, ngram and gpt-2.

Preferably, the viewing a requirement is a view of dependency relationship between the requirements, and after obtaining the requirements document, a requirement dependency tree is constructed, and a component of the requirement is viewed through the requirement dependency tree displayed through a front end, so as to correct a non-standard syntactical writing.

A requirement conformity parsing system, configured to implement the requirement conformity parsing method described above, including:
a viewing module, configured to visualize a requirement in a requirements document;
a processing module, configured to construct a requirement statement model from several upper-level requirements and several lower-level requirements;
a knowledge map module semantically expanding a proper noun in the requirement;
a checking module, configured to check a requirement traceability label existing in the requirements document;
a code supplementing module, configured to automatically generate a required requirements document according to a historical requirements document and semantic parsing.

Preferably, the process module includes:
a conformity evaluation unit, configured to check the consistency between the several upper-level requirements and the corresponding lower-level requirements thereof;
a natural language processing unit, connected to the conformity evaluation unit, where the natural language processing unit is configured to construct a requirement statement model from the several upper-level requirements and the corresponding lower-level requirements thereof;
an extraction unit, connected to the natural language processing unit, where the extraction unit is configured to extract a core content of the requirement statement model; and
a parsing unit, connected to the extraction unit, where the parsing unit is configured to perform syntax parsing, semantic parsing and classifier parsing on the core content of the requirement statement model, and give a final parsing result.

Preferably, in the conformity evaluation unit, the consistency between the several upper-level requirements and the corresponding lower-level requirements thereof is the consistency between entities and behaviors of the entities described by the several upper-level requirements and the corresponding lower-level requirements thereof.

Preferably, the core content of the requirement includes a subject, an object, a syntactical relationship formed by subject-verb-object and a quantity relationship formed by subject-keyword-object of the requirement statement.

Preferably, the knowledge map module semantically supplements two proper nouns according to a predetermined relationship between the two proper nouns, for determining the requirement conformity between the several upper-level requirements and the corresponding lower-level requirements thereof.

Preferably, the checking module compares the requirement traceability label with the structure of an actual requirements document, and a checking result of the checking module is configured to assist the requirement conformity parsing of the several upper-level requirements and the corresponding lower-level requirements thereof.

Preferably, the code completion module includes:
a training unit, configured to use a machine learning model to train a historical requirements document, and to determine whether the historical requirements document needs to be added to semantic consistency determination according to a feedback; and
a supplementing unit, where the supplementing unit is connected to the training unit, and the supplementing unit is configured to automatically generate a required requirements document according to the historical requirements document and the semantic parsing.

Preferably, the viewing module is configured to view a dependency relationship between the requirements, and visually display the requirements in the requirements document through a front end, so as to facilitate correction of non-standard syntax.

An electronic device, including a memory and a processor, the processor having a computer program stored thereon, where the computer program, when executed by the processor, implements requirement conformity parsing method described above.

A readable storage medium having a computer program stored thereon, where the computer program, when executed by a processor, implements the requirement conformity parsing method described above.

Compared with the prior art, the present invention has at least one of the following beneficial effects:
The method of the present invention conducts auxiliary checks on requirement conformity between different levels, and improves the accuracy of requirement conformity through requirement view, requirement conformity parsing, requirement knowledge map and requirement traceability checking modules; and it helps the requirements analysts to review the requirements at different levels conveniently and quickly, and improves the accuracy and standardization of requirements.

### BRIEF DESCRIPTION OF THE DRAWINGS

In order to illustrate the technical solution of the present invention more clearly, the accompanying drawings that need to be used in the description will be briefly introduced below. Apparently, the accompanying drawings in the following description are an embodiment of the present invention. For those of ordinary skill in the art may still obtain other drawings from these accompanying drawings under the premise of paying no creative effort.
FIG. 1 is a schematic flow diagram of a requirement conformity parsing method provided by an embodiment of the present invention; and
FIG. 2 is a schematic flow diagram of a requirements conformity parsing provided by an embodiment of the present invention.

### DETAILED DESCRIPTION OF THE EMBODIMENTS

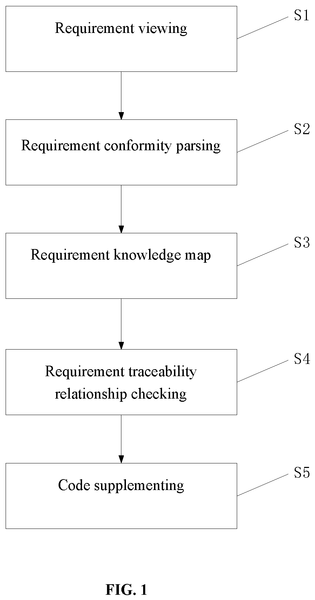

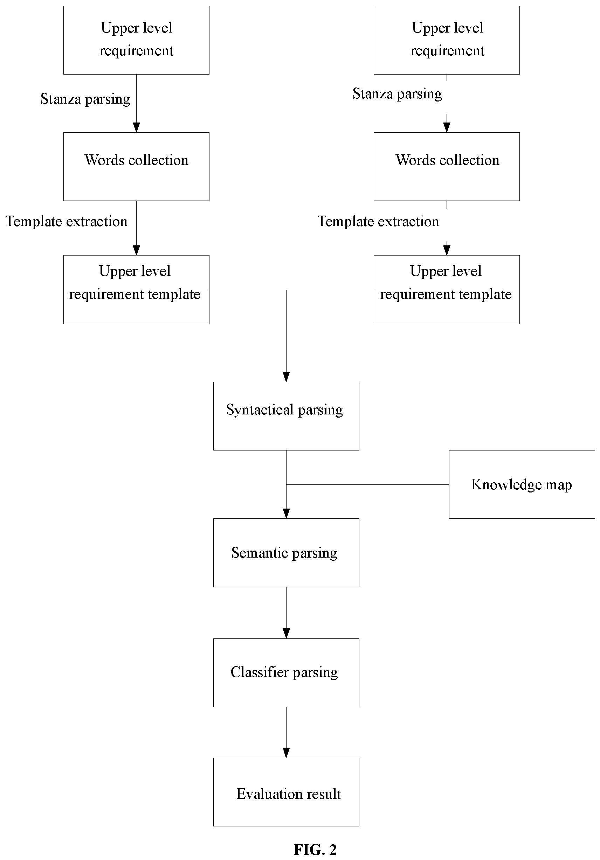

A requirement conformity parsing method, system, electronic device and storage medium proposed by the present invention will be further described in detail below in conjunction with FIG. 1 and FIG. 2. The advantages and features of the present invention will become clearer from the following description. It should be noted that the drawings are in a very simplified form and all use imprecise scales, which are only used to facilitate and clearly assist the purpose of illustrating the embodiments of the present invention. In order to make the objects, features and advantages of the present invention more comprehensible, please refer to the accompanying drawings. It should be noted that the structures, proportions, sizes, etc. shown in the drawings attached to this specification are only used to match the content disclosed in the specification, for those who are familiar with this technology to understand and read, and are not used to limit the limiting condition of implementation of the present invention, so it has no technical substantive meaning, and any modification of structure, change of proportional relationship or adjustment of size shall still fall within the scope covered by the disclosed technical content of the present invention without affecting the effect and purpose of the present invention.

In view of the deficiencies in the existing requirement conformity parsing methods, in order to help the requirements analysts to review the requirements at different levels conveniently and quickly, and improves the accuracy and standardization of requirements, the present embodiment provides a software requirement conformity parsing method based on natural language processing technologies, including:
Step S 1: obtaining a requirements document that needs to be parsed, and viewing a requirement;
where in the requirements document, the main traceability relationship between requirements is the refined relationship of requirements. An abstract requirement with a small amount of details that are not refined is referred to as an upper level requirement, and a specific requirement with implementation details and refined requirements is referred to as a lower level requirement. In the process of software requirements development in safety-critical fields, whether the entities described by the upper-level requirements and the lower-level requirements are consistent, and whether the behavior of entities is consistent has a huge impact on the management of requirements and the overall process of software development.

After the user introduces the requirements document that requires conformity parsing, the requirements can be displayed in a concise and intuitive way to facilitate subsequent conformity parsing operations. Since each requirements document in excel format may include multiple sheets, during the introduction process, the user is provided with the option to select a sheet. The introduced requirements document will construct a requirement structure tree, and each requirement will be displayed as a node, and the requirement structure tree used to display the requirements supports the function of quick indexing. The detailed text content of the requirement is displayed upon a click on a node. In addition to the conventional function of displaying requirements, clicking on the requirement text will invoke the stanza natural language parsing module in the tool to display the parsing results of the requirement statement model of the text. The requirement reviewer can intuitively understand the components of the requirement statement through the requirement statement model, and correct the non-standard syntax writing.
Step S2: performing requirement conformity parsing on several upper-level requirements and corresponding lower-level requirements thereof in the requirements document;
Step S2.1: establishing a conformity evaluation system for checking the consistency between the several upper-level requirements and the corresponding lower-level requirements thereof, where the consistency between the several upper-level requirements and the corresponding lower-level requirements thereof is the consistency between entities and behaviors of the entities described by the several upper-level requirements and the corresponding lower-level requirements, and a single statement and all requirements in the structure tree may be checked during requirement consistency parsing;
Step S2.2: using a natural language processing module to construct a requirement statement model from the several upper-level requirements and the corresponding several lower-level requirements, respectively, where the natural language processing module adopts the stanza natural language processing module;
Step S2.3: extracting a core content of the requirement by the requirement statement model, where the core content of the requirement includes a subject, an object, a syntactical relationship formed by subject-verb-object and a quantity relationship formed by subject-keyword-object of the requirement statement;
Step S2.4: performing syntax parsing, semantic parsing and classifier parsing respectively on the core content of the requirement through the conformity evaluation system, and giving a final evaluation result.

Several upper level requirements and corresponding lower level requirements thereof are introduced into the natural language processing module. Through the stanza natural language processing module, the requirements are firstly parsed to form a requirement statement model, and then through the requirement statement model, subject-verb-object and keyword and adverbial and other related content corresponding to the requirement are filled into the model designed one by one. Then, the model corresponding to the upper-level requirements and the lower-level requirements is parsed through syntax parsing, semantic parsing and classifier parsing, and the final results are evaluated to determine the conformity of the requirements.

Step S3: introducing a requirements knowledge map to semantically expand a proper noun in the requirements;
where the role of the requirement knowledge map is to define the relationship between two different proper nouns, which can be expanded at the semantic level to better determine the conformity between the upper-level requirements and the lower-level requirements by introducing the requirement knowledge map. After introducing the knowledge map, according to the relationship between the two defined by the user, the tool can expand it semantically, so that the parsing result can be more accurate. In addition, the knowledge map information used in the parsing process is given in the parsing results, and the rationality of the introduction of the knowledge can by determined artificially. At the same time, in order to better use the knowledge map and increase the flexibility and scalability of the knowledge map, the relevant content of the knowledge map in the requirement knowledge map interface can be directly modified, and the existing knowledge of the knowledge map can be displayed in a visual way.

Step S4: comparing requirement traceability labels of the several upper-level requirements and the corresponding lower-level requirements thereof with the structure of the requirements document, where a checking result of the requirement traceability relationship is configured to assist the requirement conformity parsing of the several upper-level requirements and the corresponding lower-level requirements thereof.

An effective requirement traceability conformity parsing method is an effective means to ensure the safety of the control system from the source. According to the requirement text information in each requirement statement and the requirement text information of the upper level requirements, when the upper level requirements described therein are incorrect or missing, the requirements should be incorrectly written. Therefore, for the introduced requirements document, the requirement traceability relationship is checked. In addition, in order to make the results of the requirement traceability relationship more intuitive, when the information in the structure is missing in the text, color red is used to mark the error; when the information in the text is missing in the structure, color blue is used to mark for reminder.

Step S5: automatically supplementing the requirements document.

The step of automatically supplementing the requirements document includes:
Step S5.1: using a machine learning model to train a historical requirements document, and to determine whether the historical requirements document needs to be added to semantic parsing according to a user feedback, where the machine learning model is any one of transformer, ngram and gpt-2; and
Step S5.2: automatically generating, after writing some requirements, a requirements document to be written according to the historical requirements document and the semantic parsing;
where the efficiency of requirements engineers to develop requirements is improved, and it is used to improve the efficiency of users in writing the requirements document and the accuracy of testing semantic understanding.

A requirement conformity parsing system, configured to implement the requirement conformity parsing method as described above, including:
a viewing module, configured to visualize a requirement in a requirements document;
a processing module, configured to construct a requirement statement model from several upper-level requirements and several lower-level requirements;
a knowledge map module semantically expanding a proper noun in the requirement;
a checking module, configured to check a requirement traceability label existing in the requirements document; and
a code supplementing module, configured to automatically generate a required requirements document according to a historical requirements document and semantic parsing.

The processing module includes:
a conformity evaluation unit, configured to check the consistency between the several upper-level requirements and the corresponding lower-level requirements thereof;
a natural language processing unit, connected to the conformity evaluation unit, where the natural language processing unit is configured to construct a requirement statement model from the several upper-level requirements and the corresponding lower-level requirements thereof;
an extraction unit, connected to the natural language processing unit, where the extraction unit is configured to extract a core content of the requirement statement model; and
a parsing unit, connected to the extraction unit, where the parsing unit is configured to perform syntax parsing, semantic parsing and classifier parsing on the core content of the requirement statement model, and give a final parsing result.

In the conformity evaluation unit, the consistency between the several upper-level requirements and the corresponding lower-level requirements thereof is the consistency between entities and behaviors of the entities described by the several upper-level requirements and the corresponding lower-level requirements thereof.

The core content of the requirement includes a subject, an object and a syntactical relationship formed by subject-verb-object and a quantity relationship formed by subject-keyword-object of the requirement statement.

The knowledge map module semantically supplements two proper nouns according to a predetermined relationship between the two proper nouns, for determining the requirement conformity between the several upper-level requirements and the corresponding lower-level requirements thereof.

The checking module compares the requirement traceability label with the structure of an actual requirements document, and a checking result of the checking module is configured to assist the requirement conformity parsing of the several upper-level requirements and the corresponding lower-level requirements thereof.

The code supplementing module includes:
a training unit, configured to use a machine learning model to train a historical requirements document, and to determine whether the historical requirements document needs to be added to semantic consistency determination according to a feedback, where the machine learning model is any one of transformer, ngram and gpt-2; and
a supplementing unit, where the supplementing unit is connected to the training unit, and the supplementing unit is configured to automatically generate a required requirements document according to the historical requirements document and the semantic parsing.

An electronic device, including a memory and a processor, the processor having a computer program stored thereon, where the computer program, when executed by the processor, implements the method described above.

A readable storage medium having a computer program stored thereon, where the computer program, when executed by a processor, implements the method described above.

A requirement conformity parsing method in the present embodiment is mainly applied to the requirements development and management stage in the security related field, which can assist in checking the requirement conformity between different levels. In order to improve the accuracy of requirements conformity, the modules of requirement viewing, requirement conformity parsing, requirement knowledge map and requirement traceability checking are further combined. The method can help the requirements analysts to review the requirements at different levels conveniently and quickly, and improves the accuracy and standardization of requirements.

It should be noted that in this specification, relational terms such as the first and second are only used to distinguish one entity or operation from another entities or operations, and do not necessarily require or imply that there is any such actual relationship or order between these entities or operations. Furthermore, the term "comprises", "includes" or any other variant thereof are intended to cover nonexclusive inclusion, so that a process, method, object or device including a series of elements not only includes those elements, but also includes other elements not explicitly listed, or also includes elements inherent to such process, method, object or device. Without further limitations, an element defined by the phrase "comprising a ..." does not exclude the presence of additional identical elements in the process, method, object or device including the element.

In the description of the present invention, it should be understood that the terms "center", "height", "thickness", "upper", "lower", "vertical", "horizontal", "top", "bottom", "inside", "outside", "axial", "radial", "circumferential" and other directions or positional relationships indicated are those based on the directions or positional relationships shown in the drawings, only for the convenience of describing the present invention and simplifying the description, instead of indicating or implying that the device or element referred to must have a specific orientation, be constructed and operate in a specific orientation, it cannot be understood as a limitation of the present invention. In the description of the present invention, unless otherwise specified, "plurality" means two or more.

In the description of the present invention, unless otherwise specified and limited, the terms "mounting", "connecting", "connection" and "fixing" should be understood in a broad sense, for example, they may be a fixed connection, a detachable connection, or formed integrally connection; they may be a mechanical connection, or may be an electrical connection; may be a direct connection and may also be an indirect connection via an intermediate medium, or may be communication between the interiors of two elements or the interaction between two components. Those of ordinary skill in the art can understand the specific meanings of the above terms in the present invention in specific situations.

In the present invention, unless otherwise specified and defined, the first feature "above" or "below" the second feature may include direct contact between the first and second features, or contact between the first and second features through other features instead of direct contact. Moreover, the first feature "on", "above" and "over" the second feature include that the first feature is directly above and obliquely above the second feature, or only indicates that the horizontal height of the first feature is higher than the second feature. Moreover, the first feature "under", "below" and "beneath" the second feature include that the first feature is directly under and obliquely under the second feature, or only indicates that the horizontal height of the first feature is lower than the second feature.

Although the content of the present invention has been described in detail through the above preferred embodiments, it should be understood that the above description should not be considered as limiting the present invention. Various modifications and alterations to the present invention will become apparent to those skilled in the art upon reading the above disclosure. Therefore, the protection scope of the present invention should be defined by the appended claims.

## Claims

1. A requirement conformity parsing method, comprising:
obtaining a requirements document that needs to be parsed, and viewing a requirement in the requirements document;
performing requirement conformity parsing on several upper-level requirements and corresponding lower-level requirements thereof in the requirements document;
introducing a requirements knowledge map to semantically expand a proper noun in the requirements;
checking a requirement traceability relationship; checking a requirement traceability label existing in the requirements document, so as to check the consistency between the requirement traceability label and an actual structure of the requirements document; and
automatically supplementing the requirements document.

2. The requirement conformity parsing method according to claim 1, wherein the requirement conformity parsing comprises:
establishing a conformity evaluation system for checking the consistency between the several upper-level requirements and the corresponding lower-level requirements thereof;
using a natural language processing module to construct a requirement statement model from the several upper-level requirements and the several lower-level requirements, respectively;
extracting a core content of the requirement by the requirement statement model; and
performing syntax parsing, semantic parsing and classifier parsing respectively on the core content of the requirement through the conformity evaluation system, and giving a final evaluation result.

3. The requirement conformity parsing method according to claim 2, wherein the consistency between the several upper-level requirements and the corresponding lower-level requirements thereof is the consistency between entities and behaviors of the entities described by the several upper-level requirements and the corresponding lower-level requirements.

4. The requirement conformity parsing method according to claim 2, wherein the natural language processing module is a stanza natural language processing module.

5. The requirement conformity parsing method according to claim 2, wherein the core content of the requirement comprises a subject, an object, a syntactical relationship formed by subject-verb-object and a quantity relationship formed by subject-keyword-object of the requirement statement.

6. The requirement conformity parsing method according to claim 1, wherein the step of introducing a requirements knowledge map comprises: semantically supplementing two proper nouns according a predetermined relationship between the two proper nouns, so as to determine the requirement conformity between the several upper-level requirements and the corresponding lower-level requirements thereof.

7. The requirement conformity parsing method according to claim 1, wherein requirement traceability labels of the several upper-level requirements and the corresponding lower-level requirements thereof are compared with the structure of the requirements document, and a checking result of the requirement traceability relationship is configured to assist the requirement conformity parsing of the several upper-level requirements and the corresponding lower-level requirements thereof.

8. The requirement conformity parsing method according to claim 1, wherein the step of automatically supplementing the requirements document comprises:
using a machine learning model to train a historical requirements document, and to determine whether the historical requirements document needs to be added to semantic consistency determination according to a feedback; and
automatically generating, after writing some requirements, a required requirements document according to the historical requirements document and the semantic parsing.

9. The requirement conformity parsing method according to claim 8, wherein the machine learning model is selected from any one of transformer, ngram and gpt-2.

10. The requirement conformity parsing method according to claim 1, wherein the viewing a requirement is a view of dependency relationship between the requirements, and after obtaining the requirements document, a requirement dependency tree is constructed, and a component of the requirement is viewed through the requirement dependency tree displayed through a front end, so as to correct a non-standard syntactical writing.

11. A requirement conformity parsing system, configured to implement the requirement conformity parsing method as claimed in any one of claims 1 to 10, comprising:
a viewing module, configured to visualize a requirement in a requirements document;
a processing module, connected to the viewing module, wherein the processing module is configured to construct a requirement statement model from several upper-level requirements and several lower-level requirements;
a knowledge map module, connected to the processing module, wherein the knowledge map module semantically expands a proper noun in the requirement;
a checking module, connected to the knowledge map module, wherein the checking module is configured to check a requirement traceability label existing in the requirements document;
a code supplementing module, connected to the checking module, and the code supplementing module is configured to automatically generate a required requirements document according to a historical requirements document and semantic parsing.

12. The requirement conformity parsing system according to claim 11, wherein the process module comprises:
a conformity evaluation unit, configured to check the consistency between the several upper-level requirements and the corresponding lower-level requirements thereof;
a natural language processing unit, connected to the conformity evaluation unit, wherein the natural language processing unit is configured to construct a requirement statement model from the several upper-level requirements and the corresponding lower-level requirements thereof;
an extraction unit, connected to the natural language processing unit, wherein the extraction unit is configured to extract a core content of the requirement statement model; and
a parsing unit, connected to the extraction unit, wherein the parsing unit is configured to perform syntax parsing, semantic parsing and classifier parsing on the core content of the requirement statement model, and give a final parsing result.

13. The requirement conformity parsing system according to claim 12, wherein in the conformity evaluation unit, the consistency between the several upper-level requirements and the corresponding lower-level requirements thereof is the consistency between entities and behaviors of the entities described by the several upper-level requirements and the corresponding lower-level requirements thereof.

14. The requirement conformity parsing system according to claim 12, wherein the core content of the requirement comprises a subject, an object and a syntactical relationship formed by subject-verb-object and a quantity relationship formed by subject-keyword-object of the requirement statement.

15. The requirement conformity parsing system according to claim 11, wherein the knowledge map module semantically supplements two proper nouns according to a predetermined relationship between the two proper nouns, for determining the requirement conformity between the several upper-level requirements and the corresponding lower-level requirements thereof.

16. The requirement conformity parsing system according to claim 11, wherein the checking module compares the requirement traceability label with the structure of an actual requirements document, and a checking result of the checking module is configured to assist the requirement conformity parsing of the several upper-level requirements and the corresponding lower-level requirements thereof.

17. The requirement conformity parsing system according to claim 11, wherein the code supplement module comprises:
a training unit, configured to use a machine learning model to train a historical requirements document, and to determine whether the historical requirements document needs to be added to semantic consistency determination according to a feedback; and
a supplementing unit, wherein the supplementing unit is connected to the training unit, and the supplementing unit is configured to automatically generate a required requirements document according to the historical requirements document and the semantic parsing.

18. The requirement conformity parsing system according to claim 17, wherein the machine learning model is selected from any one of transformer, ngram and gpt-2.

19. The requirement conformity parsing system according to claim 11, wherein the viewing module is configured to view a dependency relationship between the requirements, and visually display the requirements in the requirements document through a front end, so as to facilitate correction of non-standard syntax.

20. A computer device, comprising a memory and a processor, the processor having a computer program stored thereon, wherein the computer program, when executed by the processor, implements the method according to any one of claims 1 to 10.

21. A readable storage medium having a computer program stored thereon, wherein the computer program, when executed by a processor, implements the method according to any one of claims 1 to 10.
